(19) Europäisches Patentamt / European Patent Office / Office européen des brevets

(11) **EP 3 554 030 A1**

(12) **EUROPEAN PATENT APPLICATION**
published in accordance with Art. 153(4) EPC

(43) Date of publication:
**16.10.2019 Bulletin 2019/42**

(21) Application number: **17878215.7**

(22) Date of filing: **19.01.2017**

(51) Int Cl.:
**H04L 27/20** (2006.01)

(86) International application number:
**PCT/CN2017/071719**

(87) International publication number:
**WO 2018/103186 (14.06.2018 Gazette 2018/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.12.2016 CN 201611124197**

(71) Applicant: **Huazhong University of Science and Technology**
**Wuhan City**
**Hubei 430074 (CN)**

(72) Inventors:
• **TANG, Zuping**
  **Wuhan**
  **Hubei 430074 (CN)**
• **WEI, Jiaolong**
  **Wuhan**
  **Hubei 430074 (CN)**
• **XIAO, Xuan**
  **Wuhan**
  **Hubei 430074 (CN)**
• **LI, Tian**
  **Wuhan**
  **Hubei 430074 (CN)**

(74) Representative: **Becker Kurig Straus**
**Patentanwälte**
**Bavariastrasse 7**
**80336 München (DE)**

(54) **METHOD AND APPARATUS FOR RECEIVING TD-ALTBOC SIGNAL**

(57) The invention discloses a method for receiving TD-AltBOC signal, which belongs to the field of global satellite navigation. The method of the invention includes steps of: converting a TD-AltBOC radio-frequency signal into an medium frequency, performing a band-pass filtering and sampling on the signal, and peeling off a sampled signal carrier by using a local carrier to obtain a sampled baseband signal; correlating on a local waveform with the sampled baseband signal chip-by-chip in a time division manner; performing a data demodulation according to correlated output signals, and obtaining a carrier phase deviation estimated value and a code phase deviation estimated value according to the correlated output signals; generating the local waveform according to the code phase deviation estimated value; generating the local carrier according to the carrier phase deviation estimated value. The invention also provides an apparatus for receiving TD-AltBOC signal. The technical solution of the invention may be easily implemented to reduce reception complexity and save hardware resources.

FIG. 1

**Description**

BACKGROUND OF THE INVENTION

1. Field of the Invention

The invention belongs to the field of global satellite navigation, and more particularly, relates to a method and an apparatus for receiving TD-AltBOC signal.

2. Description of Related Art

B2 frequency band of COMPASS navigation system includes two sub-bands B2a and B2b; B2a is a lower sideband with center frequency at 1176.45MHz, which is the same frequency as carrier of GPS L5C; B2b is an upper sideband with center frequency at 1207.14MHz, which is the same frequency as B2 signal of COMPASS navigation system.
Since AltBOC modulation is able to carry different services on the upper and lower sidebands, not only can signals of each single sideband be received and processed independently to achieve performance identical to the traditional BPSK signal, but also be received and processed coherently to achieve better positioning accuracy. Therefore, it is adopted as a navigation signal modulation in GalileoE5a and E5b frequency bands. AltBOC (15,10) modulation that adopts center frequency at 1191.795 MHz is feasible to achieve good interoperability with GalileoE5 and GPSL5 signals, and also take the signal compatibility issue with B2 signal into account for COMPASS regional system.
With introduction of product terms to realize a four signal constant envelope AltBOC modulation, the multiplexing efficiency is decreased to degrade the signal performance to a certain extent. The invention "Method for modulating navigation signal" laid open by Huazhong University of Science and Tech in April 2011 provides a method called TD-AltBOC navigation signal modulation. In comparison with AltBOC modulation, since a chip-by-chip time division multiplexing method is adopted so only two signal components needs to be transmitted at any time slot, TD-AltBOC modulation may be realized without introduction of the product terms to achieve the multiplexing efficiency reaching 100%.
Although TD-AltBOC modulation is based on the AltBOC modulation, due to the characteristics of time division, TD-AltBOC signal cannot be received by using the existing AltBOC receivers.
The patent "method and apparatus for tracking TD-AltBOC" laid open by Space star technology co., LTD. in June 2016 provides a tracking scheme for TD-AltBOC signal. Based on the characteristics of TD-AltBOC signal, the scheme adopts a pseudo-code tracking loop created from a total of four channels in upper and lower sidebands to determine a tacking result for each of the channels, and compare the tacking results to each other, so as to obtain a loop settling time and a code loop phase-locked error jitter value. Then, parameters for optimizing the tracking loop may be found by looking up a code tracking loop bandwidth preset table according to the loop settling time and the code loop phase-locked error jitter value and may then be fed back to a code loop filter to realize a smart tracking. However, this scheme is highly complex to implement, and fails to fully utilize the advantage of the time division multiplexing characteristic of the signal itself in reception.

SUMMARY OF THE INVENTION

In response to the above drawbacks or improvement needs of the prior art, the invention provides a method and an apparatus for receiving TD-AltBOC signal, and aims to achieve a TD-AltBOC signal carrier, a pseudo-code synchronization and a data demodulation for solving the complicated technical problem of the existing TD-AltBOC signal demodulation method.
To achieve the above objective, according to an aspect of the invention, a method for receiving TD-AltBOC signal is provided, and the method includes:

(1) converting a TD-AltBOC radio-frequency signal into a medium frequency, performing a band-pass filtering and sampling on the signal, and peeling off a sampled signal carrier by using a local carrier to obtain a sampled baseband signal;
(2) correlating the sampled baseband signal with a local waveform chip-by-chip in a time division manner;
(3) performing a data demodulation according to a plurality of correlated output signals, and obtaining a carrier phase deviation estimated value and a code phase deviation estimated value according to the correlated output signals;
(4) updating the local waveform according to the code phase deviation estimated value; updating the local carrier according to the carrier phase deviation estimated value.

Specifically, the step (2) further includes: correlating the sampled baseband signal with a data section of the local waveform at an odd chip time slot; and correlating the sampled baseband signal with a pilot section of the local waveform at an even chip time slot.

Specifically, the step of obtaining the code deviation estimated value in the step (3) further includes: obtaining the code deviation estimated value by a combination and a calculation according to a combination method of the correlated output signals determined by data output from the data demodulation or known external message data.

Specifically, the step of generating the local waveform in the step (4) further includes:

(31) generating upper and lower sidebands pilot pseudo-codes, upper and lower sidebands data pseudo-codes, and sine and cosine subcarriers separately according to the code phase deviation estimated value;

(32) generating at least one early, present and at least one lag local pilot baseband waveform by combining and phase-shifting the upper and lower sidebands pilot pseudo-codes and the sine and cosine subcarriers; generating at least one early, present and at least one lag local data baseband waveform by combining and phase-shifting the upper and lower sidebands data pseudo-codes and the sine and cosine subcarriers.

According to another aspect of the invention, an apparatus for receiving TD-AltBOC signal is provided, and the system includes:

a pre-process module, configured to convert a TD-AltBOC radio-frequency signal into a medium frequency, perform a band-pass filtering and sampling on the signal, peel off a sampled signal carrier by using a local carrier to obtain a sampled baseband signal, and transmit the baseband signal to a time division complex correlation module;

the time division complex correlation module, configured to correlate the local waveform with the sampled baseband signal chip-by-chip in a time division manner, and transmit a plurality of correlated output signals to a data demodulation module, a carrier phase identification module and a code phase identification module;

the code phase identification module, configured to obtain a code deviation estimated value by a combination and a calculation according to a combination method of the correlated output signals determined by data output from a data demodulation or known external message data, and transmit the code phase deviation value to a local waveform generation module;

the carrier phase identification module, configured to obtain a carrier phase deviation estimated value from the correlated output signals, generate the local carrier from the carrier phase deviation estimated value, and transmit the local carrier to the pre-processing module;

the local waveform generation module, configured to generate the local waveform from the code phase deviation estimated value, and transmit the local waveform to the time division complex correlation module; and

the data demodulation module, configured to perform the data modulation based on the correlated output signals, and output a demodulated signal.

Specifically, the time division complex correlation module is further configured to correlate the sampled baseband signal with a data section of the local waveform at an odd chip time slot, and correlate the sampled baseband signal with a pilot section of the local waveform at an even chip time slot.

Specifically, the local waveform generation module further includes:

a pseudo-code subcarrier generating unit, configured to generate upper and lower sidebands pilot pseudo-codes, upper and lower sidebands data pseudo-codes, and sine and cosine subcarriers separately according to the code phase deviation estimated value;

a local waveform generating unit, configured to generate at least one early, present and at least one lag local pilot baseband waveform by combining and phase-shifting the upper and lower sidebands pilot pseudo-codes and the sine and cosine subcarriers; and generate at least one early, present and at least one lag local data baseband waveform by combining and phase-shifting the upper and lower sidebands data pseudo-codes and the sine and cosine subcarriers.

In general, the above technical solutions conceived by the invention have the following technical features and beneficial effects compared with the prior art:

(1) the technical solution of the invention may be easily implemented to reduce reception complexity and save hardware resources;

(2) the invention is specifically designed with respect to the TD-AltBOC time division characteristic to fully reflect the superiority of TD-AltBOC modulation.

BRIEF DESCRIPTION OF THE DRAWINGS

FIG. 1 shows a flowchart of the method in the invention.
FIG. 2 shows a sequential relationship of transmission of TD-AltBOC modulation signal components in the invention.
FIG. 3 shows a functional block diagram of an apparatus for receiving TD-AltBOC modulation signal in the invention.
FIG. 4 shows a functional block diagram of a local baseband reference waveform generator in the receiving apparatus in the invention.
FIG. 5 shows a functional block diagram of a time division complex correlator in the receiving apparatus in the invention.
FIG. 6 shows a functional block diagram of a data demodulator in the receiving apparatus in the invention.

DESCRIPTION OF THE EMBODIMENTS

In order to describe the objective, technical solution and advantages of the invention more clearly, the invention is described in detail below with reference to accompany drawings and embodiments. It should be noted that, the embodiments specifically described here are merely used to describe the invention rather than limit the invention. Further, the technical features involved in various embodiments of the invention described below may be combined together as long as they do not constitute a conflict with each other.

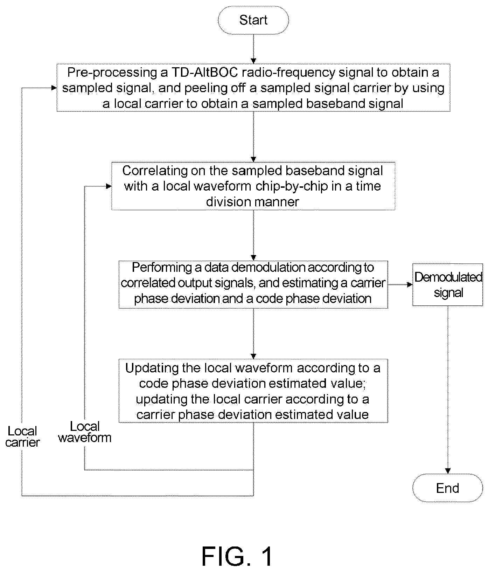

As shown by FIG. 1, the method of the invention includes the following steps:

(1) converting a TD-AltBOC radio-frequency signal into a medium frequency, performing a band-pass filtering and sampling on the signal, and peeling off a sampled signal carrier by using a local carrier to obtain a sampled baseband signal;
(2) correlating the sampled baseband signal with a local waveform chip-by-chip in a time division manner;
(3) performing a data demodulation according to a plurality of correlated output signals, and obtaining a carrier phase deviation estimated value and a code phase deviation estimated value according to the correlated output signals;
(4) updating the local waveform according to the code phase deviation estimated value; updating the local carrier according to the carrier phase deviation estimated value.

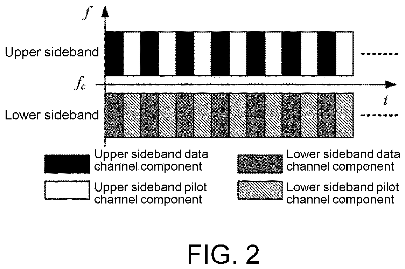

With introduction of product terms to realize a four signal constant envelope AltBOC modulation, the multiplexing efficiency is decreased to degrade the signal performance to a certain extent. BeiDou Navigation System (BDS) is configured to conduct signal transmission by adopting TD-AltBOC modulation. In comparison with AltBOC modulation, since TD-AltBOC modulation adopts the chip-by-chip time division multiplexing method so only two signal components need to be transmitted at any time slot, the constant envelope modulation may be realized without introduction of the product terms to achieve the multiplexing efficiency reaching 100%. As shown by FIG. 2, a sequential relationship of transmission of each TD-AltBOC signal component in the invention is provided.

TD-AltBOC baseband signal is defined as follows:

$$I_s + jQ_s = \left[ d_A(t) c_{AD}(t) + c_{AP}(t) \right] \left[ SC_{B,\cos}(t) - jSC_{B,\sin}(t) \right]$$
$$+ \left[ d_B(t) c_{BD}(t) + c_{BP}(t) \right] \left[ SC_{B,\cos}(t) + jSC_{B,\sin}(t) \right],$$

where $I_s$ is an in-phase component of the baseband signal; $Q_s$ is a quadrature component of the baseband signal; $d_A(t)$ is a modulated data bit waveform of a lower sideband data channel; $c_{AD}(t)$ is a pseudo-code waveform of the lower sideband data channel; $c_{AP}(t)$ is a pseudo-code waveform of a lower sideband pilot channel; $d_B(t)$ is a modulated data bit waveform of an upper sideband data channel; $c_{BD}(t)$ is a pseudo-code waveform of the upper sideband data channel; $c_{BP}(t)$ is a pseudo-code waveform of an upper sideband pilot channel; $SC_{B,\cos}(t)$ is a binary cosine subcarrier; $SC_{B,\cos}(t)=sign(\cos(2\pi f_s t))$; $SC_{B,\sin}(t)$ is a binary sine subcarrier; $SC_{B,\sin}(t)=sign(\sin(2\pi f_s t))$;

In terms of TD-AltBOC signal, the equation above is further equivalent to:

$$I_s + jQ_s = \begin{cases} \left[ d_A(t)c_{AD}(t) + d_B(t)c_{BD}(t) \right] SC_{B,\cos}(t) - j\left[ d_A(t)c_{AD}(t) - d_B(t)c_{BD}(t) \right] SC_{B,\sin}(t) & \text{at odd chip time slot} \\ \left[ c_{AP}(t) + c_{BP}(t) \right] SC_{B,\cos}(t) - j\left[ c_{AP}(t) - c_{BP}(t) \right] SC_{B,\sin}(t) & \text{at even chip time slot} \end{cases}.$$

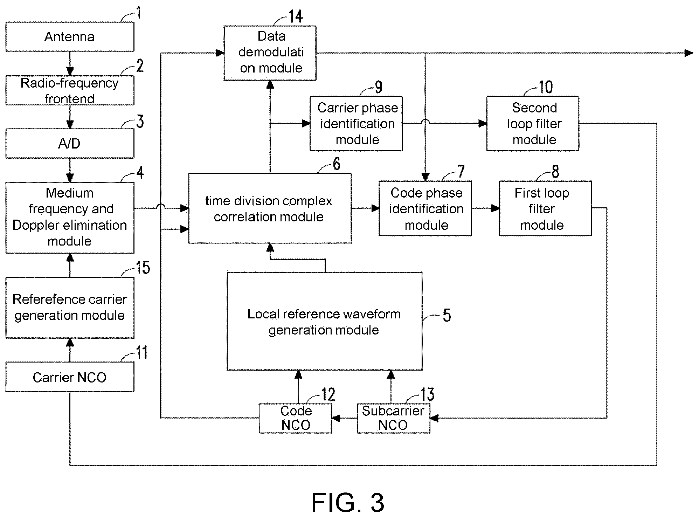

As shown by FIG. 3, an embodiment of an apparatus for receiving TD-AltBOC signal is provided, and includes:

an antenna, configured to receive TD-AltBOC radio-frequency signals transmitted by all visible satellites;
a radio-frequency frontend module, configured to perform amplifying, filtering, down converting processes on the received TD-AltBOC signal, and transmit the processed signal to an A/D module;
the A/D module, configured to sample and quantify the received signal, and transmit the obtained TD-AltBOC digital signal to a medium frequency and Doppler elimination module;
the medium frequency and Doppler elimination module, configured to obtain a baseband signal by peeling off a carrier from the TD-AltBOC digital signal using a received reference carrier, and transmit the baseband signal to a time division complex correlation module;
the time division complex correlation module, configured to correlate a received local baseband reference waveform with the baseband signal chip-by-chip in a time division manner according to a code clock frequency, and transmit correlated signals to a code phase identification module, a carrier phase identification module and a data demodulation module;
the code phase identification module, configured to simultaneously combine the correlated signals according to a combination method of the correlated signals determined by data obtained after the modulation to obtain a code phase deviation estimated value, and transmit the code phase deviation estimated value to a first loop filter module;
the first loop filter module, configured to perform a noise reduction process on the code phase deviation estimated value, and transmit a noise-reduced signal to a subcarrier NCO (numerical oscillator);
the subcarrier NCO, configured to obtain a subcarrier clock frequency from the code phase deviation estimated value underwent the noise reduction, transmit the subcarrier clock frequency to a local reference waveform generation module, and transmit the subcarrier clock frequency to a code NCO;
the code NCO, configured to receive the subcarrier clock frequency, generate the code clock frequency, and simultaneously transmit the code clock frequency to the local reference waveform generation module, the time division complex correlation module and a data demodulator;
the local reference waveform generation module, configured to generate a local baseband reference waveform according to the code clock frequency and the subcarrier clock frequency provided by the code NCO and the subcarrier NCO, and transmit the local baseband reference waveform to the time division complex correlation module;
the carrier phase identification module, configured to obtain a carrier phase deviation estimated value from the received correlated signals, and transmit the carrier phase deviation estimated value to a second loop filter module;
the second loop filter module, configured to perform the noise reduction process on the carrier phase deviation estimated value, and transmit a noise-reduced signal to a carrier NCO;
the carrier NCO, configured to obtain a carrier phase of the received signal from the carrier phase deviation estimated value underwent the noise reduction, and transmit the carrier phase to a reference carrier generator;
the carrier generator, configured to generate a reference carrier from the carrier phase, and transmit the reference carrier to the medium frequency and Doppler elimination module;
the data demodulator, configured to perform a data demodulation on the correlated signals, and transmit demodulated data to the code phase identification module.

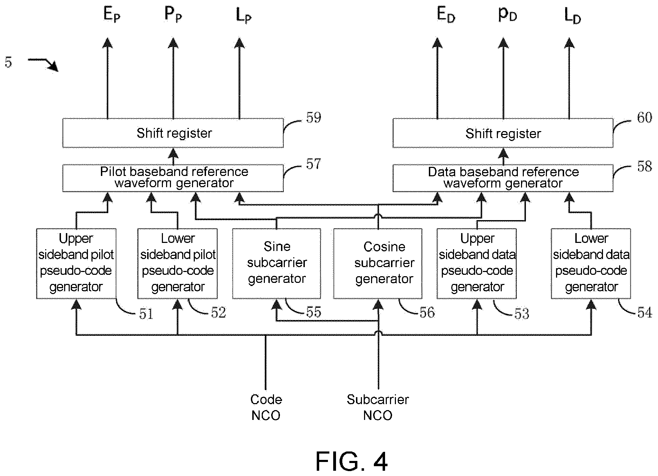

As shown by FIG. 4, a possible embodiment of the local reference waveform module is provided, where the code NCO drives an upper sideband pilot pseudo-code generator and a lower sideband pilot pseudo-code generator to generate an upper sideband pilot pseudo-code and a lower sideband pilot pseudo-code; the subcarrier NCO drives a sine subcarrier generator and a cosine subcarrier generator to generate the binary sine subcarrier and the binary cosine subcarrier.

Generation of a pilot baseband reference waveform may be expressed as

$$s_{P2} = \left[ c_{AP}(t) - c_{BP}(t) \right] SC_{B,\sin}(t),$$

Three reference signals (early, present and lag) may be obtained after passing the pilot baseband reference waveform through a shift register.
Further, the code NCO drives an upper sideband data pseudo-code generator and a lower sideband data pseudo-code generator to generate an upper sideband data pseudo-code $c_{BD}(t)$ and a lower sideband data pseudo-code $c_{AD}(t)$, respectively; the carrier NCO drives the sine subcarrier generator and the cosine subcarrier generator to generate the binary sine subcarrier $SC_{B,\sin}(t)$ and the binary cosine subcarrier $SC_{B,\cos}(t)$.

Generation of a data baseband reference waveform may be expressed as

$$s_{D1} = \left[ c_{AD}(t) + c_{BD}(t) \right] SC_{B,\cos}(t),$$

$$s_{D2} = \left[ c_{AD}(t) - c_{BD}(t) \right] SC_{B,\sin}(t),$$

$$s_{D3} = \left[ c_{AD}(t) - c_{BD}(t) \right] SC_{B,\cos}(t),$$

$$s_{D4} = \left[ c_{AD}(t) + c_{BD}(t) \right] SC_{B,\sin}(t),$$

where three reference signals (early, present and lag) may be obtained after passing the data baseband reference waveform through a shift register.

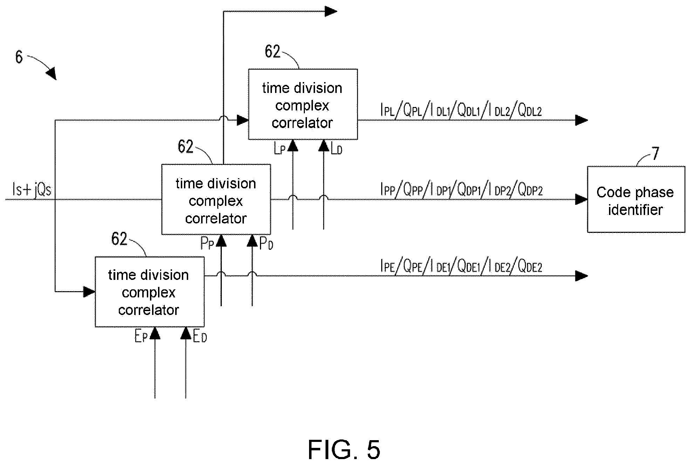

As shown by FIG. 5, a possible embodiment of the time division complex correlation module is provided, where time division complex correlators 61, 62 and 63 correlate the sampled baseband signal respectively with waveforms of the early, present and lag reference signals of locally generated digital/pilot basebands, so as to obtain related outputs of the pilot and data components, respectively. With the present branch as an example, its basal principle is described as follows:

at an even chip time slot, only the pilot components of TD-AltBOC signal are transmitted and output as integrations of

$$I_{PP} = \int \left( I_s + jQ_s \right) s_{P1} dt,$$

$$Q_{PP} = \int \left( I_s + jQ_s \right) s_{P2} dt,$$

in a code phase identifier, the following combination is implemented:

$$R_{PP} = I_{PP} + jQ_{PP},$$

the above equation is then expanded as

$$
\begin{aligned}
R_{PP} &= I_{PP} + jQ_{PP} \\
&= \int \left( I_s + jQ_s \right) s_{P1} dt + j \int \left( I_s + jQ_s \right) s_{P2} dt \\
&= \int \left( I_s + jQ_s \right) \left( s_{P1} + j s_{P2} \right) dt \\
&= \int \left( \begin{array}{l} \left[ d_A(t) c_{AD}(t) + c_{AP}(t) \right] \left[ SC_{B,\cos}(t) - jSC_{B,\sin}(t) \right] \\ + \left[ d_B(t) c_{BD}(t) + c_{BP}(t) \right] \left[ SC_{B,\cos}(t) + jSC_{B,\sin}(t) \right] \end{array} \right) \left( \begin{array}{l} \left[ c_{AP}(t) + c_{BP}(t) \right] SC_{B,\cos}(t) \\ + j \left[ c_{AP}(t) - c_{BP}(t) \right] SC_{B,\sin}(t) \end{array} \right) dt
\end{aligned}
$$

, and a correlation of the data pseudo-code and the pilot component pseudo-code is ignored to obtain

$$R_{PP} = \int \left( \begin{array}{l} \left[ c_{AP}(t) + c_{BP}(t) \right] SC_{B,\cos}(t) \\ - j \left[ c_{AP}(t) - c_{BP}(t) \right] SC_{B,\sin}(t) \end{array} \right) \left( \begin{array}{l} \left[ c_{AP}(t) + c_{BP}(t) \right] SC_{B,\cos}(t) \\ + j \left[ c_{AP}(t) - c_{BP}(t) \right] SC_{B,\sin}(t) \end{array} \right) dt,$$

which is, obviously, a self-correlation value of the pilot components combined signals of the upper and lower sidebands.

At an odd chip time slot, only the data components of TD-AltBOC signal are transmitted and output as integrations of

$$I_{DP1} = \int (I_s + jQ_s) s_{D1} dt,$$

$$Q_{DP1} = \int (I_s + jQ_s) s_{D2} dt,$$

$$I_{DP2} = \int (I_s + jQ_s) s_{D3} dt,$$

$$Q_{DP2} = \int (I_s + jQ_s) s_{D4} dt,$$

and in the code phase identifier, a self-correlation value of the data components combined signals of the upper and lower sidebands may be obtained through a combination of the correlated outputs with the principle as follows:

a target self-correlation is output as:

$$R_{DP} = \int \begin{pmatrix} [d_A(t)c_{AD}(t)+d_B(t)c_{BD}(t)]SC_{B,\cos}(t) \\ -j[d_A(t)c_{AD}(t)-d_B(t)c_{BD}(t)]SC_{B,\sin}(t) \end{pmatrix} \begin{pmatrix} [d_A(t)c_{AD}(t)+d_B(t)c_{BD}(t)]SC_{B,\cos}(t) \\ +j[d_A(t)c_{AD}(t)-d_B(t)c_{BD}(t)]SC_{B,\sin}(t) \end{pmatrix} dt,$$

a correlation of the data component pseudo-code and the pilot component pseudo-code is ignored to obtain

$$R_{DP} = \int (I_s + jQ_s) \begin{pmatrix} [d_A(t)c_{AD}(t)+d_B(t)c_{BD}(t)]SC_{B,\cos}(t) \\ +j[d_A(t)c_{AD}(t)-d_B(t)c_{BD}(t)]SC_{B,\sin}(t) \end{pmatrix} dt;$$

when $d_A=d_B=1$ within the integral period, where $d_A$ is lower sideband data and $d_B$ is upper sideband data;

$$R_{DP} = \int (I_s + jQ_s)([c_{AD}(t)+c_{BD}(t)]SC_{B,\cos}(t))dt$$
$$+ j\int (I_s + jQ_s)([c_{AD}(t)-c_{BD}(t)]SC_{B,\sin}(t))dt,$$

i.e., the combination method is:

$$R_{DP} = I_{DP1} + jQ_{DP1}.$$

When $d_A=d_B=-1$ within the integral period:

$$R_{DP} = -\int (I_s + jQ_s)([c_{AD}(t)+c_{BD}(t)]SC_{B,\cos}(t))dt$$
$$- j\int (I_s + jQ_s)([c_{AD}(t)-c_{BD}(t)]SC_{B,\sin}(t))dt,$$

i.e., the combination method is:

$$R_{DP} = -I_{DP1} - jQ_{DP1}.$$

When $d_A=d_B=1$ within the integral period:

$$R_{DP} = \int (I_s + jQ_s)\left(\left[c_{AD}(t)\text{-}c_{BD}(t)\right]SC_{B,\cos}(t)\right)dt$$
$$+ j\int (I_s + jQ_s)\left(\left[c_{AD}(t)\text{+}c_{BD}(t)\right]SC_{B,\sin}(t)\right)dt,$$

i.e., the combination method is:

$$R_{DP} = I_{DP2} + jQ_{DP2}.$$

When $d_A=d_B=-1$ within the integral period:

$$R_{DP} = -\int (I_s + jQ_s)\left(\left[c_{AD}(t)\text{-}c_{BD}(t)\right]SC_{B,\cos}(t)\right)dt$$
$$- j\int (I_s + jQ_s)\left(\left[c_{AD}(t)\text{+}c_{BD}(t)\right]SC_{B,\sin}(t)\right)dt,$$

i.e., the combination method is:

$$R_{DP} = -I_{DP2} - jQ_{DP2}.$$

Here, the code phase identifier 7 implements a combination of correlation functions and calculates the code phase deviation estimated value by the following principle:
the combination method of the correlation functions is:

$$R_E = \alpha R_{PE} + (1-\alpha) R_{DE}$$

$$R_P = \alpha R_{PP} + (1-\alpha) R_{DP},$$

$$R_L = \alpha R_{PL} + (1-\alpha) R_{DL}$$

where $\alpha$ is a combination coefficient in the above formulae, and $0<\alpha<1$.
As described above,

$$R_{PP} = I_{PP} + jQ_{PP},$$

$$R_{DP} = \begin{cases} I_{DP1} + jQ_{DP1} & \text{当} d_A = d_B = 1 \\ -I_{DP1} - jQ_{DP1} & \text{当} d_A = d_B = -1 \\ I_{DP2} + jQ_{DP2} & \text{当} d_A = -d_B = 1 \\ -I_{DP2} - jQ_{DP2} & \text{当} d_A = -d_B = -1 \end{cases},$$

similarly,

$$R_{PE} = I_{PE} + jQ_{PE},$$

$$R_{PL} = I_{PL} + jQ_{PL} ,$$

$$R_{DE} = \begin{cases} I_{DE1} + jQ_{DE1} & \overset{\underline{\Psi}}{=} d_A = d_B = 1 \\ -I_{DE1} - jQ_{DE1} & \overset{\underline{\Psi}}{=} d_A = d_B = -1 \\ I_{DE2} + jQ_{DE2} & \overset{\underline{\Psi}}{=} d_A = -d_B = 1 \\ -I_{DE2} - jQ_{DE2} & \overset{\underline{\Psi}}{=} d_A = -d_B = -1 \end{cases} ,$$

$$R_{DL} = \begin{cases} I_{DL1} + jQ_{DL1} & \overset{\underline{\Psi}}{=} d_A = d_B = 1 \\ -I_{DL1} - jQ_{DL1} & \overset{\underline{\Psi}}{=} d_A = d_B = -1 \\ I_{DL2} + jQ_{DL2} & \overset{\underline{\Psi}}{=} d_A = -d_B = 1 \\ -I_{DL2} - jQ_{DL2} & \overset{\underline{\Psi}}{=} d_A = -d_B = -1 \end{cases} ,$$

it is noted that, the calculation and the combination of the correlation function of the data component are optional. When it is not required to combine the data components for signal synchronization, the data baseband reference waveform generator may be omitted; when the data components/the pilot components are adopted in combination for tracking, a value of the data bit may come from output of the demodulation (a coding symbol before decoding) or may come from known external message data. The output of the identifier adopts a traditional DDL loop identification method, such as $|R_E|^2 - |R_L|^2$.

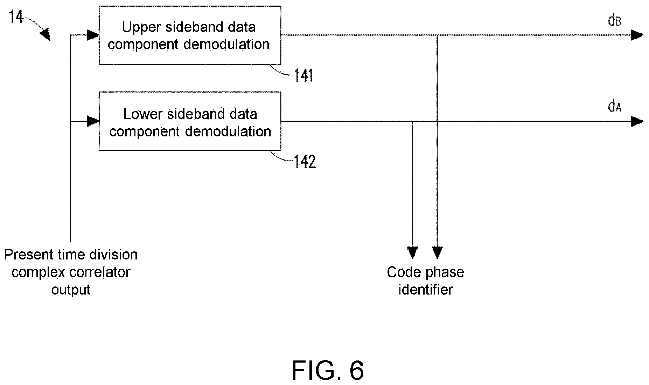

As shown by FIG. 6, a possible embodiment of the data demodulator is provided, where a data demodulation is only performed on coherent signals output by the present brunch. A demodulation method of the lower sideband data component demodulator 142 is as follows:

$$d_A = sign\left( \int (I_s + jQ_s) c_{AD}(t) \left[ SC_{B,\cos}(t) + jSC_{B,\sin}(t) \right] dt \right)$$

It should be noted that, an integration time does not exceed one data bit width, and an integration starting point is aligned with a boundary of the data bit.

Its principle is:

$$\begin{aligned} &\int (I_s + jQ_s) c_{AD}(t) \left[ SC_{B,\cos}(t) + jSC_{B,\sin}(t) \right] dt \\ &= \int \left( \begin{array}{l} \left[ d_A(t) c_{AD}(t) + c_{AP}(t) \right] \left[ SC_{B,\cos}(t) - jSC_{B,\sin}(t) \right] \\ + \left[ d_B(t) c_{BD}(t) + c_{BP}(t) \right] \left[ SC_{B,\cos}(t) + jSC_{B,\sin}(t) \right] \end{array} \right) c_{AD}(t) \left[ SC_{B,\cos}(t) + jSC_{B,\sin}(t) \right] dt \\ &= \int \left( d_A(t) c_{AD}(t) \left[ SC_{B,\cos}(t) - jSC_{B,\sin}(t) \right] \right) c_{AD}(t) \left[ SC_{B,\cos}(t) + jSC_{B,\sin}(t) \right] dt \\ &= \int d_A(t) \left[ SC_{B,\cos}(t) - jSC_{B,\sin}(t) \right] \left[ SC_{B,\cos}(t) + jSC_{B,\sin}(t) \right] dt \\ &= 2 \int d_A(t) dt \end{aligned} ,$$

In the above formula, an orthogonality between the pseudo-codes has been taken into account.

A demodulation method of the upper sideband data component demodulator 141 is as follows:

$$d_B = sign\left( \int (I_s + jQ_s) c_{BD}(t) \left[ SC_{B,\cos}(t) - jSC_{B,\sin}(t) \right] dt \right) ,$$

It should be noted that, an integration time does not exceed one data bit width, and an integration starting point is aligned with a boundary of the data bit.

The foregoing description refers to the preferred embodiments of the invention, and is not intended to limit the invention. Any modifications, equivalent substitutions and improvements made within the spirit and scope of the invention are intended to be included within the scope of the invention.

**Claims**

1. A method for receiving TD-AltBOC signal, **characterized in that**, the method comprises:

   (1) pre-processing a TD-AltBOC radio-frequency signal to obtain a sampled signal, and peeling off a sampled signal carrier by using a local carrier to obtain a sampled baseband signal;
   (2) correlating the sampled baseband signal with a local waveform chip-by-chip in a time division manner;
   (3) performing a data demodulation according to a plurality of correlated output signals, and obtaining a carrier phase deviation estimated value and a code phase deviation estimated value according to the correlated output signals;
   (4) updating the local waveform according to the code phase deviation estimated value; updating the local carrier according to the carrier phase deviation estimated value.

2. The method for receiving TD-AltBOC signal according to claim 1, **characterized in that**, the step (2) further comprises: correlating the sampled baseband signal with a data section of the local waveform at an odd chip time slot; and correlating the sampled baseband signal with a pilot section of the local waveform at an even chip time slot.

3. The method for receiving TD-AltBOC signal according to claim 1, **characterized in that**, the step of obtaining the code deviation estimated value in the step (3) further comprises: obtaining the code deviation estimated value by a combination and a calculation according to a combination method of the correlated output signals determined by data output from the data demodulation or known external message data.

4. The method for receiving TD-AltBOC signal according to claim 1, **characterized in that**, the step of generating the local waveform in the step (4) further comprises:

   (31) generating upper and lower sidebands pilot pseudo-codes, upper and lower sidebands data pseudo-codes, and sine and cosine subcarriers separately according to the code phase deviation estimated value;
   (32) generating at least one early, present and at least one lag local pilot baseband waveform by combining and phase-shifting the upper and lower sidebands pilot pseudo-codes and the sine and cosine subcarriers; generating at least one early, present and at least one lag local data baseband waveform by combining and phase-shifting the upper and lower sidebands data pseudo-codes and the sine and cosine subcarriers.

5. An apparatus for receiving TD-AltBOC signal, **characterized in that**, the apparatus comprises:

   a pre-process module, configured to pre-processes a TD-AltBOC radio-frequency signal to obtain a sampled signal, peel off a sampled signal carrier by using a local carrier to obtain a sampled baseband signal, and transmit the baseband signal to a time division complex correlation module;
   the time division complex correlation module, configured to correlate a local waveform with the sampled baseband signal chip-by-chip in a time division manner, and transmit a plurality of correlated output signals to a data demodulation module, a carrier phase identification module and a code phase identification module;
   the code phase identification module, configured to obtain a code deviation estimated value by a combination and a calculation according to a combination method of the correlated output signals determined by data output from a data demodulation or known external message data, and transmit the code phase deviation value to a local waveform generation module;
   the carrier phase identification module, configured to obtain a carrier phase deviation estimated value from the correlated output signals, generate the local carrier from the carrier phase deviation estimated value, and transmit the local carrier to the pre-processing module;
   the local waveform generation module, configured to generate the local waveform from the code phase deviation estimated value, and transmit the local waveform to the time division complex correlation module;
   the data demodulation module, configured to perform the data modulation based on the correlated output signals, and output a demodulated signal.

6. The apparatus for receiving TD-AltBOC signal according to claim 1, **characterized in that**, the time division complex correlation module is further configured to correlate the sampled baseband signal with a data section of the local waveform at an odd chip time slot, and correlate the sampled baseband signal with a pilot section of the local waveform at an even chip time slot.

7. The apparatus for receiving TD-AltBOC signal according to claim 1, **characterized in that**, the local waveform generation module further comprises:

a pseudo-code subcarrier generating unit, configured to generate upper and lower sidebands pilot pseudo-codes, upper and lower sidebands data pseudo-codes, and sine and cosine subcarriers separately according to the code phase deviation estimated value;
a local waveform generating unit, configured to generate at least one early, present and at least one lag local pilot baseband waveform by combining and phase-shifting the upper and lower sidebands pilot pseudo-codes and the sine and cosine subcarriers; and generate at least one early, present and at least one lag local data baseband waveform by combining and phase-shifting the upper and lower sidebands data pseudo-codes and the sine and cosine subcarriers.

Start

Pre-processing a TD-AltBOC radio-frequency signal to obtain a
sampled signal, and peeling off a sampled signal carrier by using
a local carrier to obtain a sampled baseband signal

Correlating on the sampled baseband signal
with a local waveform chip-by-chip in a time
division manner

Performing a data demodulation according to
correlated output signals, and estimating a carrier
phase deviation and a code phase deviation

Demodulated
signal

Updating the local waveform according to a
code phase deviation estimated value;
updating the local carrier according to a
carrier phase deviation estimated value

Local
carrier

Local
waveform

End

FIG. 1

FIG. 2

FIG. 3

FIG. 4

6

62

time division complex correlator

$I_{PL}/Q_{PL}/I_{DL1}/Q_{DL1}/I_{DL2}/Q_{DL2}$

$L_P$   $L_D$

62

$I_S+jQ_S$

time division complex correlator

$I_{PP}/Q_{PP}/I_{DP1}/Q_{DP1}/I_{DP2}/Q_{DP2}$

7

Code phase identifier

$P_P$   $P_D$

62

time division complex correlator

$I_{PE}/Q_{PE}/I_{DE1}/Q_{DE1}/I_{DE2}/Q_{DE2}$

$E_P$   $E_D$

FIG. 5

FIG. 6

# INTERNATIONAL SEARCH REPORT

| International application No. |
| --- |
| PCT/CN2017/071719 |

**A. CLASSIFICATION OF SUBJECT MATTER**

H04L 27/20 (2006.01) i

According to International Patent Classification (IPC) or to both national classification and IPC

**B. FIELDS SEARCHED**

Minimum documentation searched (classification system followed by classification symbols)

H04L; H04B; G01S

Documentation searched other than minimum documentation to the extent that such documents are included in the fields searched

Electronic data base consulted during the international search (name of data base and, where practicable, search terms used)

CNABS, CNTXT, CNKI, VEN: 时分, 交替二进制偏移载波, 接收, 解调, 相关, 载波, 更新, 码片, td-altboc, receive, demodulation, correlation, carrier, update

**C. DOCUMENTS CONSIDERED TO BE RELEVANT**

| Category* | Citation of document, with indication, where appropriate, of the relevant passages | Relevant to claim No. |
| --- | --- | --- |
| Y | CN 104375151 A (TSINGHUA UNIVERSITY), 25 February 2015 (25.02.2015), description, paragraphs [0035]-[0058], and figures 1-4 | 1-7 |
| A | CN 103278825 A (XI'AN BRANCH OF CHINA ACADEMY OF SPACE TECHNOLOGY), 04 September 2013 (04.09.2013), entire document | 1-7 |
| A | US 2004208236 A1 (FENTON, P.C.), 21 October 2004 (21.10.2004), entire document | 1-7 |
| Y | 张爽娜等, "一种 ALTBOC, TD-ALTBOC, ACE-BOC 通用高精度接收处理方法", 第七届中国卫星导航学术年会论文集, 23 May 2016 (23.05.2016), sections 3.2 and 3.3, and figure 4, (A general Methodology for High Accuracy ALTBOC, TD-ALTBOC and ACE-BOC Receiver), no-official translation (ZHANG, Shuangna et al., Proceeding of the 7th China Satellite Navigation Conference) | 1-7 |

☐ Further documents are listed in the continuation of Box C.        ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 21 August 2017 | 04 September 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer JIANG, Ling Telephone No. (86-10) 62089875 |
| --- | --- |

Form PCT/ISA/210 (second sheet) (July 2009)

## INTERNATIONAL SEARCH REPORT
### Information on patent family members

| International application No. |
| --- |
| PCT/CN2017/071719 |

| Patent Documents referred in the Report | Publication Date | Patent Family | Publication Date |
| --- | --- | --- | --- |
| CN 104375151 A | 25 February 2015 | CN 104375151 B | 19 October 2016 |
| | | EP 3195014 A1 | 26 July 2017 |
| | | WO 2016041493 A1 | 24 March 2016 |
| CN 103278825 A | 04 September 2013 | CN 103278825 B | 27 May 2015 |
| US 2004208236 A1 | 21 October 2004 | WO 2004093339 A8 | 25 August 2011 |
| | | EP 1614230 A1 | 11 January 2006 |
| | | DE 602004019200 D1 | 12 March 2009 |
| | | JP 4646901 B2 | 09 March 2011 |
| | | US 2010246645 A1 | 30 September 2010 |
| | | US 8467433 B2 | 18 June 2013 |
| | | AU 2004229819 A1 | 28 October 2004 |
| | | CA 2522463 A1 | 28 October 2004 |
| | | WO 2004093339 A1 | 28 October 2004 |
| | | US 8442097 B2 | 14 May 2013 |
| | | AT 421806 T | 15 February 2009 |
| | | EP 1614230 B1 | 21 January 2009 |
| | | CA 2522463 C | 28 May 2013 |
| | | JP 2006523970 A | 19 October 2006 |
| | | AU 2004229819 B2 | 04 June 2009 |
| | | US 2009175319 A1 | 09 July 2009 |
| | | US 7738536 B2 | 15 June 2010 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Method for modulating navigation signal. Huazhong University of Science and Tech, April 2011

- method and apparatus for tracking TD-AltBOC. Space star technology co., LTD, June 2016